# EUROPÄISCHE PATENTSCHRIFT

(11) **EP 4 225 616 B1**
(45) Veröffentlichungstag und Bekanntmachung des Hinweises auf die Patenterteilung: **25.09.2024**
(21) Anmeldenummer: 21794103.8
(22) Anmeldetag: 06.10.2021
(51) Int. Cl.: B60R 21/231, B60R 21/2338

(54) **GASSACKANORDNUNG FÜR EIN FAHRZEUGINSASSEN-RÜCKHALTESYSTEM**
AIRBAG ARRANGEMENT FOR A VEHICLE OCCUPANT RESTRAINT SYSTEM
AGENCEMENT DE COUSSIN GONFLABLE POUR UN SYSTÈME DE RETENUE DES OCCUPANTS D'UN VÉHICULE

(30) Priorität: 09.10.2020 DE 102020126492
(43) Veröffentlichungstag der Anmeldung: 16.08.2023
(73) Patentinhaber: Joyson Safety Systems Germany GmbH, 63743 Aschaffenburg (DE)
(72) Erfinder: SCHOLZ, Lukas, 12157 Berlin (DE); PAUSCH, Tobias, 10435 Berlin (DE); YAN, Mingxi, 10963 Berlin (DE); RIPPER, Florian, 13088 Berlin (DE); POLZIN, Tobias, 10555 Berlin (DE)
(74) Vertreter: Maikowski & Ninnemann Patentanwälte Partnerschaft mbB
(86) Internationale Anmeldenummer: PCT/EP2021/077527
(87) Internationale Veröffentlichungsnummer: WO 2022/074043

(56) Entgegenhaltungen:
- WO-A1-2019/121222
- WO-A1-2020/156953
- DE-A1- 102017 208 481
- JP-A- 2013 018 378
- KR-B1- 102 096 850
- US-A1- 2019 023 214
- US-A1- 2020 101 930

## Beschreibung

Die Erfindung betrifft eine Gassackanordnung für ein Fahrzeuginsassen-Rückhaltesystem. Sie betrifft ferner einen Fahrzeugsitz, der eine solche Gassackanordnung umfasst.

Fahrzeuginsassen-Rückhaltesysteme und deren Gassackanordnungen können in vielfältigen Positionen an einer Fahrzeugstruktur angeordnet und befestigt sein. Dabei beeinflussen der zur Verfügung stehende Bauraum sowie die Platzverhältnisse im unmittelbaren Umfeld der Befestigungsposition des Fahrzeuginsassen-Rückhaltesystems die Größe und Form des Gassacks der Gassackanordnung. Die Platzverhältnisse können im Hinblick auf einen der erforderlichen Schutzwirkung entsprechenden Gassack unzureichend sein. Daher können mehrere kleine Gassäcke vorgesehen sein, die an verschiedenen Positionen der Fahrzeugstruktur angeordnet sind. Diese Einzelsysteme können in einem Gesamtschutzsystem zusammenwirken. Um zu vermeiden, dass sich die Gassäcke durch den Aufprall eines Fahrzeuginsassen verschieben, kann eine dynamisch (während oder am Ende des Aufblasvorgangs) realisierte Verbindung der Gassäcke vorgesehen sein.

Die DE 10 2017 208481 A1, die den Oberbegriff des Anspruchs 1 bildet, , beschreibt eine Gassackanordnung mit zwei Airbags, die sich beidseitig seitlich neben dem Insassen erstrecken, für ein Fahrzeuginsassen-Rückhaltesystem.

Das der Erfindung zugrunde liegende Problem besteht darin, eine Gassackanordnung mit mehreren verlässlich miteinander verbindbaren Gassäcken zu schaffen, wobei die Verbindung auch unter beengten Platzverhältnissen ausgebildet werden kann.

Dieses Problem wird durch eine Gassackanordnung mit den Merkmalen des Anspruchs 1 gelöst. Weiterbildungen der Erfindung sind in den abhängigen Ansprüchen angegeben. Danach umfasst die erfindungsgemäße Gassackanordnung mindestens einen ersten und mindestens einen zweiten zum Schutz eines Fahrzeuginsassen aufblasbaren Gassack, wobei der mindestens eine erste und mindestens eine zweite Gassack jeweils an einer Fahrzeugstruktur anzuordnen sind. Die Gassackanordnung umfasst ferner ein Verbindungssystem, das zur Ausbildung einer mechanischen Verbindung zwischen dem mindestens einen ersten Gassack und dem mindestens einen zweiten Gassack vorgesehen ist. Das Verbindungssystem weist ein erstes Verbindungselement auf, das an dem mindestens einen ersten Gassack befestigt ist, und ein zweites Verbindungselement, das an dem mindestens einen zweiten Gassack befestigt ist. Die Anzahl der ersten und zweiten Verbindungselemente kann beliebig sein. Zur Ausbildung der mechanischen Verbindung zwischen dem mindestens einen ersten Gassack und dem mindestens einen zweiten Gassack wirken das erste und das zweite Verbindungselement zusammen. Dabei wird die mechanische Verbindung zwischen dem mindestens einen ersten Gassack und dem mindestens einen zweiten Gassack erst während oder am Ende des Aufblasvorgangs (Entfaltungsprozesses) der Gassäcke ausgebildet, indem sich der mindestens eine erste Gassack und der mindestens eine zweite Gassack einander annähern oder kontaktieren. Ob ein Annähern der Gassäcke ausreicht oder ob ein Kontakt der Gassäcke notwendig ist, hängt dabei insbesondere von der konkreten Ausgestaltung des Verbindungssystems ab.

Um die mechanische Verbindung während oder am Ende des Aufblasvorgangs der Gassäcke realisieren zu können, können der mindestens eine erste und der mindestens eine zweite Gassack zueinander und das erste und zweite Verbindungselement an dem mindestens einen ersten beziehungsweise mindestens einen zweiten Gassack insbesondere derart angeordnet sein, dass sich das erste und zweite Verbindungselement während des Aufblasvorgangs des mindestens einen ersten und mindestens einen zweiten Gassacks aufeinander zu bewegen.

Die Gassackanordnung zeichnet sich dadurch aus, dass das erste Verbindungselement einen ersten Abschnitt aufweist, der über eine lösbare Verbindung an dem mindestens einen ersten Gassack direkt oder indirekt befestigt ist, und einen zweiten Abschnitt, der sich außerhalb des ersten Abschnitts befindet und über eine nicht lösbare Verbindung an dem mindestens einen ersten Gassack befestigt ist. Dabei können der erste und der zweite Abschnitt derart zueinander angeordnet sein, dass die nicht lösbare Verbindung, die dauerhaft in dem zweiten Abschnitt ausgebildet ist, nach dem Lösen der lösbaren Verbindung, die nur anfänglich in dem ersten Abschnitt ausgebildet ist, eine freie Bewegung des ersten Abschnitts gegenüber dem mindestens einen Gassack nicht verhindert. Ferner ist vorgesehen, dass die lösbare Verbindung erst nach zumindest teilweiser Ausbildung der mechanischen Verbindung (beispielsweise einer Vorabverbindung) zwischen dem mindestens einen ersten Gassack und dem mindestens einen zweiten Gassack lösbar ist.

So kann zunächst eine Vorabverbindung zwischen den Gassäcken ausgebildet werden, bevor die lösbare Verbindung gelöst wird. Durch die Vorabverbindung wird ein Abprallen der Gassäcke voneinander in Folge ihres Erstkontakts vermieden und nehmen die Gassäcke eine vorbestimmte Position zueinander ein. Durch das Lösen der lösbaren Verbindung kann sich dann zumindest der erste Abschnitt des ersten Verbindungselements frei gegenüber dem mindestens einen ersten Gassack bewegen. Dabei kann sich die Form und/oder Ausrichtung des ersten Verbindungselements ändern. So kann sich zumindest der erste Abschnitt des ersten Verbindungselements beispielsweise in Richtung des zweiten Verbindungselements bewegen und die mechanische Verbindung (Vorabverbindung) zwischen dem mindestens einen ersten und dem mindestens einen zweiten Gassack, die bereits vor dem Lösen der lösbaren Verbindung durch das Verbindungssystem ausgebildet worden ist, verstärken. Insbesondere kann das Verbindungssystem nun seinen vollständig verbundenen Zustand annehmen.

Durch die zumindest abschnittsweise Bewegungsfreiheit des ersten Verbindungselements nach dem Lösen der lösbaren Verbindung kann sich das erste Verbindungselement nun (zumindest abschnittsweise) zwischen dem mindestens einen ersten und dem mindestens einen zweiten Gassack erstrecken und sich dabei insbesondere quer zu der Richtung ausrichten, in die der Fahrzeuginsasse im Rahmen eines Unfalls beschleunigt (verlagert) wird. Hierdurch öffnet sich dem Fahrzeuginsassen beim Lösen der lösbaren Verbindung ein Spalt zwischen dem mindestens einen ersten und dem mindestens einen zweiten Gassack, in den er sich hineinbewegen und damit die Verbindungselemente auf Scherung beanspruchen kann. Auf diese Weise können von der Gassackanordnung verhältnismäßig große Kräfte aufgenommen werden, ohne dass die Verbindung zwischen dem mindestens einen ersten und dem mindestens einen zweiten Gassack versagt. Die Rückhaltewirkung der Gassackanordnung kann also insbesondere aufgrund des Verbindungssystems verbessert werden.

Als eine lösbare Verbindung ist eine Verbindung zu betrachten, die unter bestimmten Voraussetzungen (äußerer Einwirkung) versagt beziehungsweise sich löst. Dabei kann die lösbare Verbindung dergestalt sein, dass sie durch das Lösen zerstört wird. Beispielsweise kann die lösbare Verbindung als Reißnaht oder Heftnaht ausgebildet sein. Alternativ kann die lösbare Verbindung als zerstörungsfreie Verbindung ausgestaltet sein. Eine derartige lösbare Verbindung kann beispielsweise als Klettverbindung oder als magnetische Verbindung mit einer vergleichsweise geringen Haltekraft ausgebildet sein.

Vorliegend ist die lösbare Verbindung vorzugsweise so gestaltet, dass sie dadurch versagt oder sich löst, dass der zu schützende Fahrzeuginsasse auf die Gassackanordnung prallt und damit eine Kraft auf die Gassackanordnung ausübt, die zu einer (lokalen) Verformung der Gassäcke führt. Alternativ kann die lösbare Verbindung so gestaltet sein, dass sie dadurch versagt oder sich löst, dass der mindestens eine erste Gassack und der mindestens eine zweite Gassack im aufgeblasenen Zustand aufeinander prallen beziehungsweise infolgedessen wieder voneinander abprallen. Gemäß einer weiteren Alternative kann die lösbare Verbindung so gestaltet sein, dass sie dadurch versagt oder sich löst, dass die Hülle des mindestens einen ersten Gassacks während des Aufblasvorgangs durch den im Innenraum des Gassacks zunehmenden Innendruck gestrafft wird. So kann die lösbare Verbindung beispielsweise vorübergehend eine in der Hülle ausgebildete Falte fixieren, die durch den zunehmenden Innendruck und das Versagen der lösbaren Verbindung geglättet wird.

Demgegenüber ist die nicht lösbare Verbindung vorzugsweise so gestaltet, dass sie unter den vorgenannten Umständen nicht versagt oder sich löst.

Gemäß einer Ausführungsform ist das erste Verbindungselement flächig ausgebildet und wird von einem Rand begrenzt. Entlang des Rands können mehrere Endbereiche definiert sein. So kann die lösbare Verbindung in einem ersten Endbereich des ersten Verbindungselements ausgebildet sein, und die nicht lösbare Verbindung insbesondere in einem zweiten Endbereich des ersten Verbindungselements, der dem ersten Endbereich gegenüberliegt. Zwischen dem ersten und dem zweiten Endbereich kann sich ein Zwischenbereich erstrecken, der flächenmäßig beispielsweise den größten Teil des ersten Verbindungselements ausmacht. So bleibt das erste Verbindungselement nach Lösen der lösbaren Verbindung über seinen zweiten Endbereich an dem mindestens einen ersten Gassack fixiert, kann sich aber im Übrigen (erster Endbereich, Zwischenbereich) frei gegenüber dem mindestens einen ersten Gassack bewegen.

Eine weitere Ausführungsform sieht vor, dass das erste Verbindungselement zumindest abschnittsweise mehrlagig ausgebildet ist. Dabei kann es vorzugsweise doppellagig ausgebildet sein. Unter Doppellagigkeit beziehungsweise Mehrlagigkeit ist zu verstehen, dass zwei oder mehr Lagen übereinander angeordnet sind, nicht nebeneinander. So kann das erste Verbindungselement eine innere Lage und eine äußere Lage umfassen, wobei die innere Lage an dem mindestens einen ersten Gassack befestigt ist und wobei die äußere Lage mittels der lösbaren Verbindung an der inneren Lage (und dem mindestens einen ersten Gassack) befestigt ist. Die innere Lage befindet sich demnach zwischen der äußeren Lage und dem mindestens einen ersten Gassack. Zusätzlich zu der lösbaren Verbindung kann zwischen der inneren Lage und der äußeren Lage eine nicht lösbare Verbindung ausgebildet sein. Diese Variante ist insbesondere geeignet, wenn die innere Lage und die äußere Lage durch zwei separate Materialzuschnitte ausgebildet werden. So sichert die nicht lösbare Verbindung eine dauerhafte abschnittsweise Befestigung der äußeren Lage an der inneren Lage. Wenn die äußere Lage und die innere Lage jedoch durch Umschlagen eines einstückigen Materialzuschnitts ausgebildet sind, kann unter Umständen auf die zusätzliche nicht lösbare Verbindung verzichtet werden. Jedoch kann auch in diesem Fall eine zusätzliche nicht lösbare Verbindung nützlich sein, um beispielsweise die äußere Lage dauerhaft in einer bestimmten Position bezüglich der inneren Lage zu halten. Weiterhin kann bei einem ersten Verbindungselement mit innerer und äußerer Lage vorgesehen sein, dass die innere Lage nur mittels einer oder mehrerer nicht lösbarer Verbindung(en) an dem mindestens einen ersten Gassack befestigt ist.

Denkbar ist auch, dass die lösbare Verbindung und die nicht lösbare Verbindung (die das erste Befestigungselement an dem mindestens einen ersten Gassack beziehungsweise die äußere Lage an der inneren Lage befestigen) derart zueinander angeordnet sind, dass sich die lösbare Verbindung zwischen dem zu schützenden Fahrzeuginsassen und der nicht lösbaren Verbindung befindet, wenn die Gassackanordnung bestimmungsgemäß zum Schutz des Fahrzeuginsassen an einer Fahrzeugstruktur angeordnet ist.

Gemäß einer weiteren Ausführungsform sind sowohl das erste Verbindungselement als auch das zweite Verbindungselement zumindest abschnittsweise zwei- oder mehrlagig ausgebildet. Dabei umfassen das erste und das zweite Verbindungselement jeweils mindestens eine innere Lage und eine äußere Lage. Die mindestens eine innere Lage ist dabei zwischen der entsprechenden äußeren Lage und dem entsprechenden Gassack angeordnet. Die mindestens eine innere Lage kann über die nicht lösbare Verbindung an dem mindestens einen ersten bzw. zweiten Gassack befestigt sein, während die äußere Lage mittels einer ersten lösbaren Verbindung an dem mindestens einen ersten bzw. zweiten Gassack befestigt sein kann. Auch kann mehr als eine lösbare Verbindung pro Verbindungselement vorgesehen sein. Die zusätzliche (zweite) lösbare Verbindung kann der vorübergehenden Befestigung der äußeren Lage an der mindestens einen inneren Lage dienen. Die erste lösbare Verbindung und zweite lösbare Verbindung können so gestaltet sein, dass die erste lösbare Verbindung während des Aufblasvorgangs der Gassäcke bei einem geringeren Krafteintrag versagt als die zweite lösbare Verbindung. Da die auf die Gassäcke einwirkende Kraft während des Aufblasvorgangs in der Regel zunächst zunimmt, versagt zunächst die erste lösbare Verbindung und zeitlich versetzt die zweite lösbare Verbindung. Es kann vorgesehen sein, dass im bestimmungsgemäß angeordneten Zustand der Gassackanordnung die erste lösbare Verbindung (insbesondere in Fahrtrichtung betrachtet) näher an dem Fahrzeuginsassen ist als die zweite lösbare Verbindung. Im miteinander verbundenen Zustand des ersten und zweiten Verbindungselements kann sich das Verbindungssystem zwischen dem ersten und dem zweiten Gassack erstrecken und einen Abstand zwischen dem ersten und dem zweiten Gassack zumindest im Bereich des Verbindungssystems ermöglichen.

Unter einem Verbindungssystem wird verallgemeinernd ein System verstanden, welches das voneinander Wegbewegen der Gassäcke behindert. Insbesondere kann auch vorgesehen sein, dass die Verbindung zwischen dem ersten und zweiten Verbindungselement durch Bewegung der Verbindungselemente relativ zueinander (nur) entlang einer vorbestimmten Richtung voneinander trennbar ist. Das Verbindungssystem, das zur Verbindung des mindestens einen ersten und des mindestens einen zweiten Gassacks vorgesehen ist, kann gemäß einer Ausführungsform ein flächig ausgebildetes erstes Verbindungselement und ein flächig ausgebildetes zweites Verbindungselement umfassen.

Beispielsweise kann das Verbindungssystem als Klettverbindung ausgebildet sein. Die Klettverbindung kann ein Klettelement und ein Flauschelement umfassen, wobei das erste Verbindungselement das Flauschelement umfasst und das zweite Verbindungselement das Klettelement, oder vice versa. Anstelle des Flauschelements kann ein Velourselement oder ein Pilzkopfelement eingesetzt werden. Anstelle des Klettelements kann ein Hakenelement oder ein Pilzkopfelement eingesetzt werden. Dabei können die verschiedenen Ausgestaltungen des ersten und zweiten Verbindungselements je nach Bedarf miteinander kombiniert werden.

Alternativ kann das Verbindungssystem als magnetische Verbindung ausgebildet sein. Dabei können das erste Verbindungselement und das zweite Verbindungselement jeweils magnetisch sein. Da eine magnetische Verbindung allein nicht zwingend gegen ein (seitliches) Verschieben der Verbindungselemente gegeneinander geschützt ist, kann es sinnvoll sein, die magnetische Verbindung mit einer Rastverbindung zu kombinieren. So können das erste und das zweite Verbindungselement so geformt sein, dass sie ineinander greifen und damit ein (seitliches) Verschieben der magnetischen Verbindungselemente gegeneinander behindern. Auch kann mit den magnetischen Eigenschaften der Verbindungselemente erreicht werden, dass die sich während des Aufblasvorgangs der Gassäcke einander annähernden Verbindungselemente zudem magnetisch anziehen und damit in Kontakt miteinander geraten. So kann beispielsweise auch eine Klettverbindung mit einer magnetischen Verbindung kombiniert werden.

Gemäß einer weiteren Ausführungsform ist das zweite Befestigungselement nur mittels mindestens einer nicht lösbaren Verbindung an dem mindestens einen zweiten Gassack befestigt. Alternativ kann das zweite Befestigungselement wie das erste Befestigungselement ausgestaltet sein. So kann auch das zweite Verbindungselement einen ersten Abschnitt umfassen, in dem eine lösbare Verbindung ausgebildet ist. Diese lösbare Verbindung dient dann der direkten oder indirekten Befestigung des zweiten Befestigungselements an dem mindestens einen zweiten Gassack. Ferner kann das zweite Befestigungselement einen zweiten Abschnitt umfassen, der sich außerhalb des ersten Abschnitts befindet und über eine nicht lösbare Verbindung an dem mindestens einen zweiten Gassack befestigt ist.

In einer konkreten Ausgestaltung ist die Gassackanordnung für ein sitzbasiertes Fahrzeuginsassen-Rückhaltesystem vorgesehen. Dabei sind der mindestens eine erste und mindestens eine zweite Gassack jeweils vorgesehen, um an einem Fahrzeugsitz angeordnet zu werden. Der mindestens eine erste und der mindestens eine zweite Gassack können hier zum Schutz des Kopfes und des Brustbereichs des sich auf dem Fahrzeugsitz befindlichen Fahrzeuginsassen vorgesehen sein. So können im bestimmungsgemäß an einem Fahrzeugsitz angeordneten Zustand der Gassackanordnung und im aufgeblasenen Zustand des mindestens einen ersten und zweiten Gassacks sich der mindestens eine erste Gassack und der mindestens eine zweite Gassack auf gegenüberliegenden Seiten des Kopfbereichs und jeweils vor dem Brustbereich des auf dem Fahrzeugsitz sitzenden Insassen erstrecken. Dabei kann das Verbindungssystem vor dem Brustbereich ausgebildet sein.

In Kombination mit mindestens einem Gasgenerator bildet die erfindungsgemäße Gassackanordnung ein Fahrzeuginsassen-Rückhaltesystem. Der mindestens eine Gasgenerator ist dabei ausgebildet, den mindestens einen ersten Gassack und den mindestens einen zweiten Gassack mit einem Gas zu befüllen. Dabei ist der mindestens eine Gasgenerator vorzugsweise vorgesehen, um den mindestens einen ersten Gassack und den mindestens einen zweiten Gassack zeitgleich und mit gleichem Volumenstrom zu befüllen. Auch können der mindestens eine erste und der mindestens eine zweite Gassack symmetrisch aufgebaut sein.

Die Erfindung betrifft auch einen Fahrzeugsitz, der eine erfindungsgemäße Gassackanordnung umfasst. Dabei kann die Gassackanordnung lösbar an dem Fahrzeugsitz befestigt sein, so dass diese nach einem Auslösefall ersetzt werden kann. Der mindestens eine erste Gassack und der mindestens eine zweite Gassack können sich im gefalteten Zustand in Sitzbreitenrichtung zumindest teilweise gegenüberliegen. Die Gassäcke können im gefalteten Zustand in einander gegenüberliegenden seitlichen beziehungsweise oberen Abschnitten einer Rückenlehne, einer Sitzfläche oder einer Kopfstütze des Fahrzeugsitzes oder in einander gegenüberliegenden Armlehnen des Fahrzeugsitzes angeordnet sein.

Die Erfindung wird im Folgenden anhand von Ausführungsbeispielen unter Bezugnahme auf die Figuren näher erläutert. Es zeigen:
- Fig. 1: eine schematische Darstellung eines Fahrzeuginsassen-Rückhaltesystems mit einer Gassackanordnung im entfalteten Zustand gemäß einer Ausführungsform zusammen mit einem Fahrzeugsitz;
- Fig. 2-4: schematische Darstellungen (in der Draufsicht) unterschiedlicher Stadien eines Auslösevorgangs und Fixiervorgangs der Gassackanordnung aus Fig. 1;
- Fig. 5-6: schematische Darstellungen (in der Draufsicht) unterschiedlicher Stadien eines Auslösevorgangs und Fixiervorgangs einer Gassackanordnung gemäß einer weiteren Ausführungsform;
- Fig. 7-8: schematische Darstellungen (in der Draufsicht) unterschiedlicher Stadien eines Auslösevorgangs und Fixiervorgangs einer Gassackanordnung gemäß einer weiteren Ausführungsform; und
- Fig. 9-12: schematische Darstellungen (in der Draufsicht) unterschiedlicher Stadien eines Auslösevorgangs und Fixiervorgangs einer Gassackanordnung gemäß einer weiteren Ausführungsform.

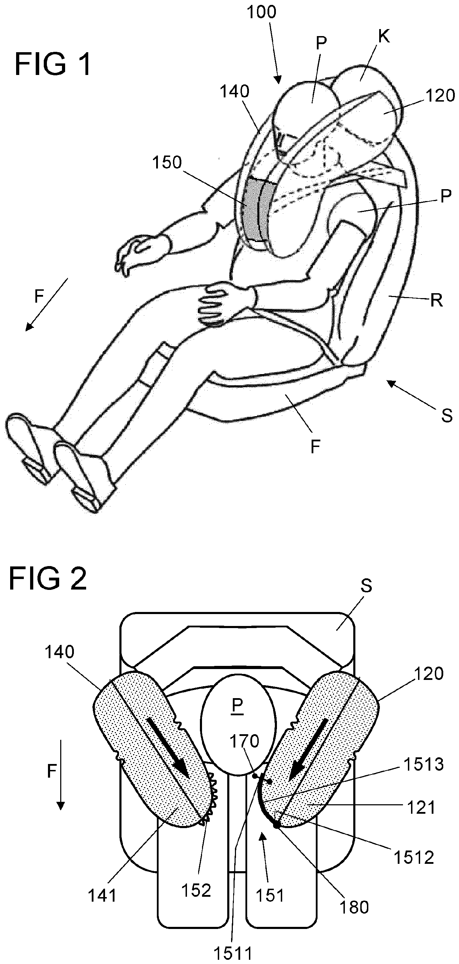

Figur 1 zeigt eine schematische Darstellung einer ersten Ausführungsform einer Gassackanordnung 100 für ein Fahrzeuginsassen-Rückhaltesystem. Die Gassackanordnung 100 umfasst einen ersten Gassack 120 und einen zweiten Gassack 140, die zum Schutz des Fahrzeuginsassen, beispielsweise im Fall eines erfassten Aufpralls, aufblasbar sind. Die Gassäcke 120, 140 sind in Figur 1 im aufgeblasenen Zustand dargestellt. In dem gezeigten Beispiel befindet sich zudem ein Fahrzeuginsasse P auf einem Sitz S des Fahrzeugs. Die Gassackanordnung 100 ist dabei derart in Bezug auf den Insassen P angeordnet, dass sich die Gassäcke 120, 140 auf gegenüberliegenden Seiten des Insassen P jeweils neben dem Insassen P erstrecken. Dabei erstrecken sich die Gassäcke 120, 140 aus der Rückenlehne des Fahrzeugsitzes S heraus in Fahrtrichtung F.

Für eine Bereitstellung der Gassackanordnung 100 in einem Fahrzeug sind die Gassäcke 120, 140 im gefalteten Zustand beispielsweise an gegenüberliegenden Seiten einer Rückenlehne R eines Sitzes S oder in deren oberen Bereich, benachbart zu einer Kopfstütze, anbringbar und in der Rückenlehne R verstaubar. Alternativ können die Gassäcke 120, 140 im gefalteten Zustand an derart benachbarten Strukturen des Fahrzeugs angebracht sein, dass die Gassäcke 120, 130 im entfalteten Zustand einander berühren können.

Der erste Gassack 120 und der zweite Gassack 140 sind jeweils so geformt, dass sie sich zumindest teilweise seitlich neben dem Kopf des Insassen P, oberhalb von dessen Schultern und vor dem Brustbereich des Insassen P erstrecken. Der erste Gassack 120 und der zweite Gassack 140 sind dabei (spiegel)symmetrisch zueinander aufgebaut beziehungsweise angeordnet. Ferner ist vorgesehen, dass die beiden Gassäcke 120, 140 mittels eines gemeinsamen oder zweier getrennter Gasgeneratoren zeitgleich mit Gas befüllt werden. Dabei ist insbesondere auch der Volumenstrom des Gases für die beiden Gassäcke 120 140 im Wesentlichen gleich groß.

Die Gassackanordnung 100 umfasst ferner ein Verbindungssystem 150, das in Figur 1 in dem grau hinterlegten Bereich, der sich bestimmungsgemäß vor dem Brustbereich des Insassen P befindet, an dem ersten Gassack 120 und dem zweiten Gassack 140 angeordnet ist. Das Verbindungssystem 150 dient der Ausbildung einer mechanischen Verbindung zwischen dem ersten Gassack 120 und dem zweiten Gassack 140 während oder am Ende des Aufblasvorgangs der Gassäcke 120, 140, um die Gassäcke 120, 140 vor der Brust des Fahrzeuginsassen P miteinander zu verbinden und die Verbindung zu schließen. Das Verbindungssystem 150 und sein Funktionsprinzip werden anhand der Figuren 2 bis 4 näher erläutert.

Das Verbindungssystem 150 gestattet die Ausbildung einer Verbindung zwischen dem ersten Gassack 120 und dem zweiten Gassack 140, indem sich der erste Gassack 120 und der zweite Gassack 140 während oder am Ende ihres Aufblasvorgangs einander annähern oder kontaktieren. Der erste und zweite Gassack 120, 140 sind demnach unter Berücksichtigung ihrer Form und Größe derart relativ zueinander an einer Fahrzeugstruktur (dem Fahrzeugsitz S) anzuordnen, dass sie sich während oder am Ende des Aufblasvorgangs einander ausreichend annähern, und zwar zumindest in dem Bereich, in dem das Verbindungssystem 150 angeordnet ist.

Das Verbindungssystem 150 weist ein erstes Verbindungselement 151 auf, das an dem ersten Gassack 120 befestigt ist, und ein zweites Verbindungselement 152, das an dem zweiten Gassack 140 befestigt ist. Dabei sind das erste und zweite Verbindungselement 151, 152 derart an dem ersten beziehungsweise zweiten Gassack 120, 140 angeordnet, dass die beiden Verbindungselemente 151, 152 im aufgeblasenen Zustand der Gassäcke 120, 140 einander direkt gegenüberstehen, so dass sie eine Verbindung miteinander ausbilden können. Das erste und das zweite Verbindungselement 151, 152 sind dabei in einem Vorderabschnitt 121, 141 des ersten beziehungsweise zweiten Gassacks 120, 140 auf einander zugewandten Seiten des ersten beziehungsweise zweiten Gassacks 120, 140 angeordnet. Die Vorderabschnitte 121, 141 sind Abschnitte, die sich in Fahrtrichtung F betrachtet vorn und im aufgeblasenen Zustand der Gassäcke 120, 140 vor dem Insassen P erstrecken.

In dem Ausführungsbeispiel der Figuren 2 bis 4 ist das Verbindungssystem 150 als Klettverbindung mit einem Klettelement und einem Flauschelement ausgebildet. Das erste Verbindungselement 151 umfasst dabei das Flauschelement und das zweite Verbindungselement 152 das Klettelement. Jedoch können Flausch- und Klettelement auch vertauscht sein.

Das erste und zweite Verbindungselement 151, 152 sind jeweils flächig (beispielsweise streifenförmig) ausgebildet und an einer Außenoberfläche des ersten beziehungsweise zweiten Gassacks 120, 140 befestigt. Das zweite Verbindungselement 152 ist dabei mittels einer oder mehrerer nicht lösbarer Verbindungen an dem zweiten Gassack 140 befestigt.

Das erste Verbindungselement 151 umfasst einen ersten Abschnitt 1511 und einen zweiten Abschnitt 1512, der sich außerhalb des ersten Abschnitts 1511 befindet. Der erste Abschnitt 1511 ist mittels einer lösbaren Verbindung 170, die als Reißnaht ausgebildet ist, an dem ersten Gassack 120 befestigt. Der zweite Abschnitt 1512 ist mittels einer nicht lösbaren Verbindung 180 an dem ersten Gassack 120 befestigt. Der erste und zweite Abschnitt 1511, 1512 befinden sich dabei in einander gegenüberliegenden Endbereichen des ersten Verbindungselements 151. Zwischen dem ersten Abschnitt 1511 und dem zweiten Abschnitt 1512 befindet sich ein dritter Abschnitt 1513, in dem keine Verbindung zwischen dem ersten Verbindungselement 151 und dem ersten Gassack 120 ausgebildet ist. Der erste Abschnitt 1511 ist dabei (entlang der Fahrtrichtung F betrachtet) dem Insassen P zugewandt, während der zweite Abschnitt 1512 von dem Insassen P abgewandt ist (bei bestimmungsgemäßer Anordnung der Gassackanordnung 100). Somit befindet sich die lösbare Verbindung 170 im bestimmungsgemäß angeordneten Zustand der Gassackanordnung 100 zwischen dem Insassen P und der nicht lösbaren Verbindung 180.

In Figur 2 sind die Gassäcke 120, 140 während des Entfaltungsprozesses dargestellt. Das heißt, dass die Gassäcke 120, 140 in Figur 2 noch nicht vollständig entfaltet sind. Insbesondere befinden sich die Gassäcke 120, 140 in einem Stadium des Entfaltungsprozesses, in dem das erste und zweite Verbindungselement 151, 152 noch zu weit voneinander entfernt sind, um unter Ausbildung einer Verbindung zusammenzuwirken. Die lösbare Verbindung 170 ist intakt.

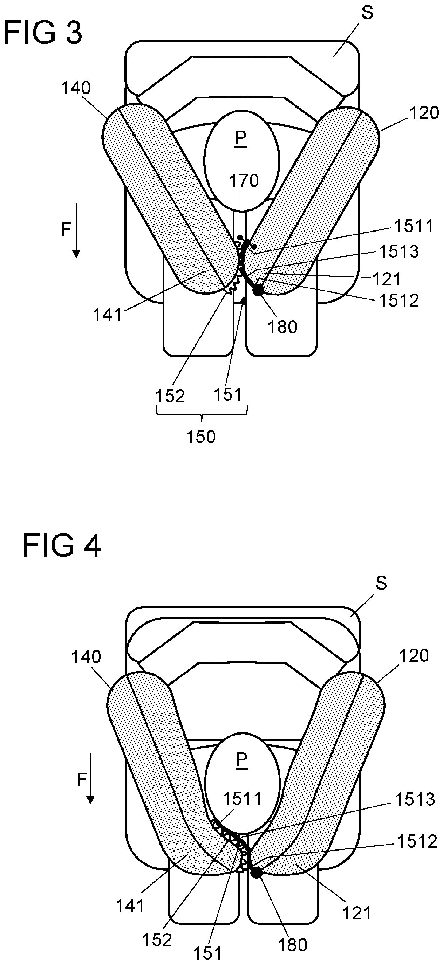

Figur 3 zeigt die beiden Gassäcke 120, 140 in einem weiter fortgeschrittenen Stadium des Entfaltungsprozesses. Hier berühren die Vorderabschnitte 121, 141 des ersten und zweiten Gassacks 120, 140 einander. Damit kommen auch die in den Vorderabschnitten 121, 141 der Gassäcke 120, 140 angeordneten Verbindungselemente 151, 152 abschnittsweise miteinander in Kontakt, so dass das erste Verbindungselement 151 und das zweite Verbindungselement 152 eine Vorabverbindung ausbilden. Die lösbare Verbindung 170 ist weiterhin intakt. Der Kopf des Insassen P ist noch nicht beziehungsweise nur geringfügig in Fahrtrichtung F beschleunigt (verlagert) worden und weitestgehend in der in Figur 2 dargestellten Position.

In Figur 4 sind die beiden Gassäcke 120, 140 schließlich in ihrem vollständig entfalteten Zustand zu sehen. Der Kopf des Insassen P ist in Folge eines Frontalaufpralls in Fahrtrichtung F beschleunigt (verlagert) worden und dringt unter Ausführung einer Nickbewegung (nach schräg unten) in die Gassäcke 120, 140 ein, die sich dadurch lokal verformen. Durch die Verformung der Gassäcke 120, 140 im Bereich der Vorabverbindung der Verbindungselemente 151, 152 löst sich die lösbare Verbindung 170 zwischen dem ersten Abschnitt 1511 des ersten Verbindungselements 151 und dem ersten Gassack 120. Der erste Abschnitt 1511 und zum Teil auch der dritte Abschnitt 1513 (der nicht an dem ersten Gassack 120 befestigt ist) sind nun gegenüber dem ersten Gassack 120 frei beweglich. Sie bewegen sich auf das zweite Verbindungselement 152 zu und erweitern dadurch die bereits bestehende Vorabverbindung hinsichtlich der Kontaktfläche und der Kontaktkraft. Figur 4 zeigt das erste und zweite Verbindungselement 151, 152 in ihrem vollständig miteinander verbundenen Zustand. Im weiteren Verlauf der Beschleunigung des Kopfs des Insassen P dringt dieser in das Verbindungssystem 150 in seinem vollständig verbundenen Zustand ein. Dabei wird das Verbindungssystem 150 überwiegend auf Scherung beansprucht.

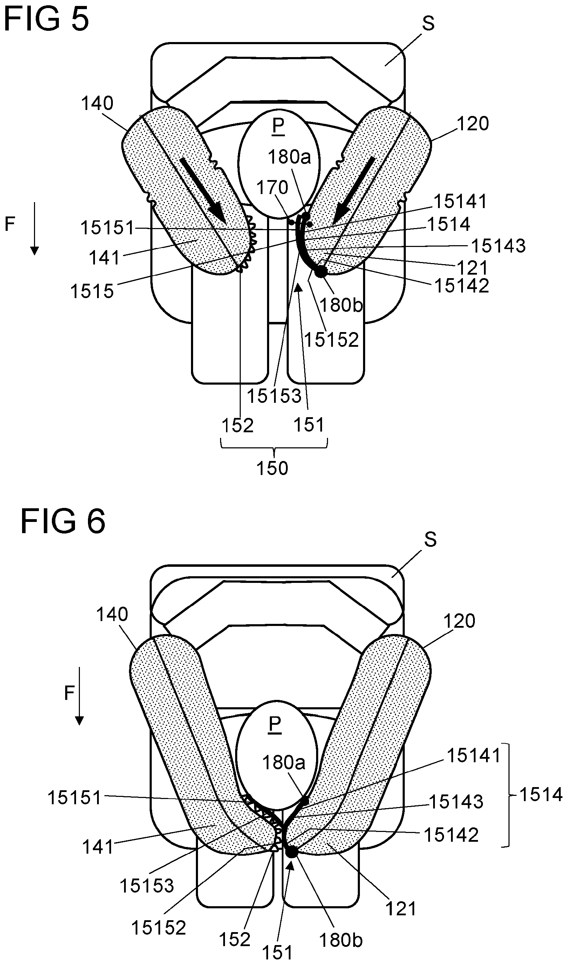

Die Figuren 5 und 6 zeigen eine zweite Ausführungsform der Gassackanordnung 100 in zwei unterschiedlichen Stadien ihres Auslösevorgangs und Fixiervorgangs. Dabei entspricht das Stadium der zweiten Ausführungsform in Figur 5 jenem der ersten Ausführungsform in Figur 2, und das Stadium der zweiten Ausführungsform in Figur 6 jenem der ersten Ausführungsform in Figur 4. Die zweite Ausführungsform unterscheidet sich von der ersten Ausführungsform insbesondere in der Ausgestaltung des ersten Verbindungselements 151.

In der zweiten Ausführungsform ist das erste Verbindungselement 151 zweilagig mit einer inneren Lage 1514 und einer äußeren Lage 1515 ausgebildet. Die innere Lage 1514 ist (direkt) auf der Außenoberfläche des ersten Gassacks 120 angeordnet, und die äußere Lage 1515 (direkt) auf der inneren Lage 1514, so dass sich die innere Lage 1514 (unmittelbar) zwischen der äußeren Lage 1515 und dem ersten Gassack 120 (genauer gesagt dessen Gassackhülle) befindet. Beispielhaft entsprechen in dieser Ausführungsform die innere Lage 1514 und die äußere Lage 1515 einander in Form und Größe. Jedoch können sich die Lagen 1514, 1515 in dieser Hinsicht auch voneinander unterscheiden.

Die innere Lage 1514 und die äußere Lage 1515 umfassen jeweils einen ersten Abschnitt 15141, 15151 und einen zweiten Abschnitt 15142, 15152, der sich außerhalb des ersten Abschnitts 15141, 15151 befindet. In den ersten und zweiten Abschnitten 15141, 15151, 15142, 15152 sind jeweils Verbindungen ausgebildet, die weiter unten erläutert werden. Die ersten und zweiten Abschnitte 15141, 15151, 15142, 15152 befinden sich dabei in einander gegenüberliegenden Endbereichen der inneren und äußeren Lage 1514, 1515. Zwischen jedem ersten Abschnitt 15141, 15151 und zweiten Abschnitt 15142, 15152 befindet sich ein dritter Abschnitt 15143, 15153, wobei zumindest in dem dritten Abschnitt 15153 der äußeren Lage 1515 keine Verbindung ausgebildet ist.

Der erste Abschnitt 15141 der inneren Lage 1514 ist mittels einer ersten nicht lösbaren Verbindung 180a an dem ersten Gassack 120 befestigt, der zweite Abschnitt 15142 der inneren Lage 1514 mittels einer zweiten nicht lösbaren Verbindung 180b. Die Verbindungen 180a, 180b können untereinander verbunden sein, so dass auch der dritte Abschnitt 15143 der inneren Lage 1514 nicht lösbar mit dem ersten Gassack 120 verbunden ist. Die zweite nicht lösbare Verbindung 180b dient zudem der Befestigung des zweiten Abschnitts 15152 der äußeren Lage 1515 an der inneren Lage 1514 und dem ersten Gassack 120. Der erste Abschnitt 15151 der äußeren Lage 1515 ist mittels einer lösbaren Verbindung 170 am ersten Abschnitt 15141 der inneren Lage 1514 befestigt.

In Figur 5 sind die sich entfaltenden Gassäcke 120, 140 noch so weit voneinander beabstandet, so dass die Verbindungselemente 151, 152 keine Verbindung miteinander ausbilden können. Im weiteren Verlauf des Entfaltungsprozesses der Gassäcke 120, 140 nähern sich die Vorderabschnitte 121, 141 der Gassäcke 120, 140 einander an und bildet die äußere Lage 1515 des ersten Verbindungselements 151 eine Vorabverbindung mit dem zweiten Verbindungselement 152 aus, während die lösbare Verbindung 170 intakt bleibt (nicht dargestellt).

Wie bereits im Zusammenhang mit der ersten Ausführungsform beschrieben, wird der Kopf des Insassen P in Folge des Aufpralls in Fahrtrichtung F beschleunigt (verlagert) und führt zum Aufbrechen der lösbaren Verbindung 170 zwischen den ersten Abschnitten 15141, 15151 der inneren und äußeren Lage 1514, 1515 des ersten Verbindungselements 151. Der erste Abschnitt 15151 und zum Teil auch der dritte Abschnitt 15153 (der sich zwischen dem ersten und dem zweiten Abschnitt befindet) der äußeren Lage 1515 bewegen sich auf das zweite Verbindungselement 152 zu und erweitern dadurch die bereits bestehende Vorabverbindung zwischen dem ersten und zweiten Verbindungselement 151, 152. Figur 6 zeigt das erste und zweite Verbindungselement 151, 152 in ihrem vollständig miteinander verbundenen Zustand und die Gassäcke 120, 140 in ihrem vollständig entfalteten Zustand.

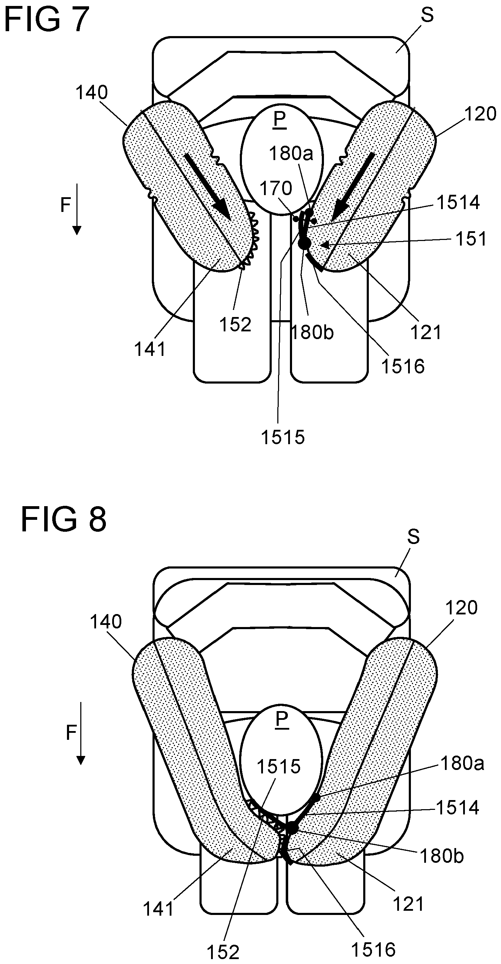

Die Figuren 7 und 8 zeigen eine dritte Ausführungsform der Gassackanordnung 100 in zwei unterschiedlichen Stadien ihres Auslösevorgangs und Fixiervorgangs. Dabei entspricht das Stadium der dritten Ausführungsform in Figur 7 jenem der ersten Ausführungsform in Figur 2, und das Stadium der dritten Ausführungsform in Figur 8 jenem der ersten Ausführungsform in Figur 4. Die dritte Ausführungsform unterscheidet sich von der ersten und von der zweiten Ausführungsform insbesondere durch die Ausgestaltung des ersten Verbindungselements 151.

Dabei umfasst das erste Verbindungselement 151 der dritten Ausführungsform das erste Verbindungselement 151 der zweiten Ausführungsform, jedoch in verkleinerter Form. Zusätzlich umfasst das erste Verbindungselement 151 der dritten Ausführungsform eine dritte Lage 1516. Die dritte Lage 1516 ist mittels einer oder mehrerer nicht lösbarer Verbindungen an dem ersten Gassack 120 befestigt. Dabei ist die dritte Lage direkt neben den aufeinander liegenden inneren und äußeren Lagen 1514, 1515 angeordnet. Im vollständig aufgeblasenen Zustand der Gassäcke 120, 140 befindet sich die dritte Lage 1516 (im bestimmungsgemäß angeordneten Zustand der Gassackanordnung 100) in Fahrtrichtung F betrachtet vor der inneren und äußeren Lage 1514, 1515. Die äußere Lage 1515 und die dritte Lage 1516 sind dabei derart bemessen und angeordnet, dass sie zusammen im vollständig verbundenen Zustand des Verbindungssystems 150 das zweite Verbindungselement 152 im Wesentlichen vollständig abdecken. Die bereits im Zusammenhang mit der ersten und zweiten Ausführungsform beschriebene Vorabverbindung bildet sich hier zwischen dem zweiten Verbindungselement 152 und einem Abschnitt der äußeren Lage 1515 und/oder einem Abschnitt der dritten Lage 1516 aus (nicht dargestellt).

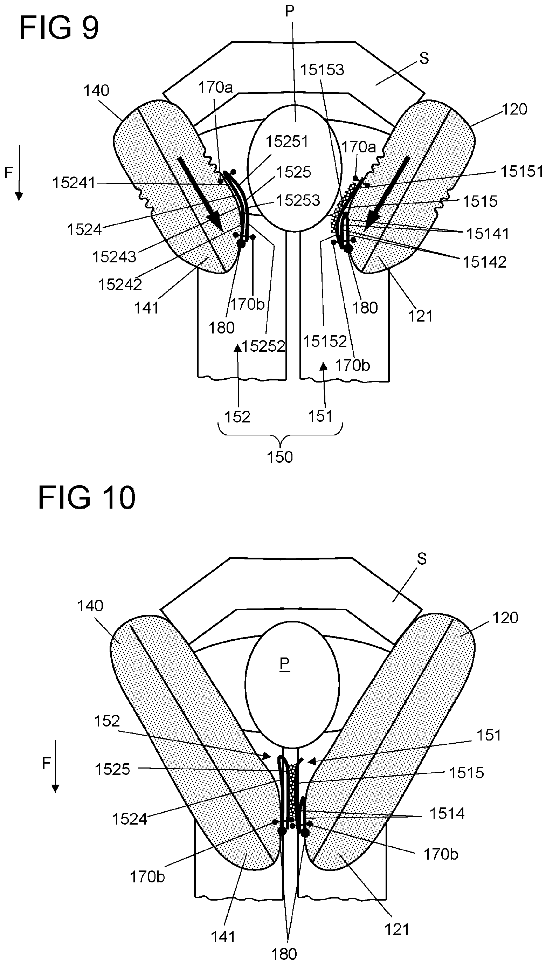

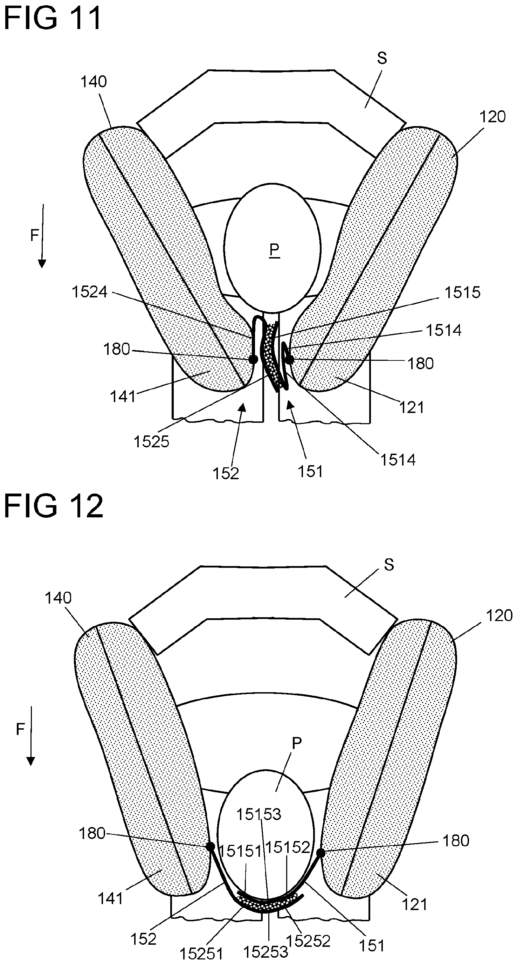

Die Figuren 9 bis 12 zeigen eine vierte Ausführungsform der Gassackanordnung 100 in unterschiedlichen Stadien ihres Auslösevorgangs und Fixiervorgangs. Dabei entspricht das Stadium der vierten Ausführungsform in Figur 9 jenem der ersten Ausführungsform in Figur 2, das Stadium der vierten Ausführungsform in Figur 10 jenem der ersten Ausführungsform in Figur 3, und das Stadium der vierten Ausführungsform in Figur 12 jenem der ersten Ausführungsform in Figur 4. Die vierte Ausführungsform unterscheidet sich von der ersten Ausführungsform insbesondere in der Ausgestaltung des ersten Verbindungselements 151 und des zweiten Verbindungselements 152.

In der vierten Ausführungsform ist das erste Verbindungselement 151 mehrlagig unter Ausbildung von Falten an dem ersten Gassack 120 angeordnet. Konkret sind hier eine äußere Lage 1515 und zwei innere Lagen 1514 ausgebildet. Die Anzahl der inneren Lagen 1514 kann jedoch auch von zwei abweichen und einen anderen geradzahligen Wert annehmen. Die inneren Lagen 1514 sind zwischen der Außenoberfläche des ersten Gassacks 120 und der äußeren Lage 1515 angeordnet. Die äußere Lage 1515 weist hier eine größere Ausdehnung auf als die einzelnen inneren Lagen 1514. Jedoch kann das Größenverhältnis entsprechend der gewünschten Gesamtgröße des ersten Verbindungselements 151 unterschiedlich ausfallen.

Die äußere Lage 1515 umfasst einen ersten Abschnitt 15151 und einen zweiten Abschnitt 15152, der sich außerhalb des ersten Abschnitts 15151 befindet. In dem ersten Abschnitt 15151 ist eine erste lösbare Verbindung 170a ausgebildet, während in dem zweiten Abschnitt 15152 eine zweite lösbare Verbindung 170b ausgebildet ist. Die lösbaren Verbindungen 170a, 170b dienen der Befestigung der äußeren Lage 1515 an dem ersten Gassack 120. Die zweite lösbare Verbindung 170b dient zudem der Fixierung der Faltung. Der erste Abschnitt 15151 und der zweite Abschnitt 15152 befinden sich dabei in einander gegenüberliegenden Endbereichen der äußeren Lage 1515. Zwischen dem ersten Abschnitt 15151 und dem zweiten Abschnitt 15152 befindet sich ein dritter Abschnitt 15153, in dem keine Verbindung ausgebildet ist.

Die inneren Lagen 1514 umfassen jeweils einen ersten Abschnitt 15141 und einen zweiten Abschnitt 15142. Dabei sind die ersten Abschnitte 15141 im Bereich des dritten Abschnitts 15153 der äußeren Lage 1515 angeordnet, die zweiten Abschnitte 15142 im Bereich des zweiten Abschnitts 15152 der äußeren Lage 1515. Die zweiten Abschnitte 15142 der inneren Lagen 1514 sind mittels der zweiten lösbaren Verbindung 170b an dem ersten Gassack 120 festgelegt. Jedoch kann die zweite lösbare Verbindung 170b die äußere Lage 1515 auch nur mit einer oder mehreren inneren Lagen 1514 verbinden, nicht mit dem ersten Gassack 120. Die dem ersten Gassack 120 am nächsten gelegene innere Lage 1514 ist zudem in ihrem zweiten Abschnitt 15142 mittels einer nicht lösbaren Verbindung 180 an dem ersten Gassack 120 festgelegt. Die ersten Abschnitte 15141 der inneren Lagen 1514 sind nicht gesondert untereinander und/oder am ersten Gassack 120 festgelegt.

Auf der dem ersten Gassack 120 abgewandten Seite der äußeren Lage 1515 ist (beispielsweise zwischen der ersten lösbaren Verbindung 170a und der zweiten lösbaren Verbindung 170b) ein Kontaktelement (beispielsweise in Form eines Klettelements einer Klettverbindung) ausgebildet.

Das zweite Verbindungselement 152 ist zweilagig mit einer inneren Lage 1524 und einer äußeren Lage 1525 ausgebildet. Die innere Lage 1524 ist (direkt) auf der Außenoberfläche des zweiten Gassacks 140 angeordnet, und die äußere Lage 1525 (direkt) auf der inneren Lage 1524, so dass sich die innere Lage 1524 (unmittelbar) zwischen der äußeren Lage 1525 und dem zweiten Gassack 140 (genauer gesagt dessen Gassackhülle) befindet. Dabei können die innere Lage 1524 und die äußere Lage 1525 in Form und Größe identisch sein. Jedoch können sich die Lagen 1524, 1525 in dieser Hinsicht auch voneinander unterscheiden.

Die innere Lage 1524 und die äußere Lage 1525 umfassen jeweils einen ersten Abschnitt 15241, 15251 und einen zweiten Abschnitt 15242, 15252, der sich außerhalb des ersten Abschnitts 15241, 15251 befindet. Die ersten und zweiten Abschnitte 15241, 15251, 15242, 15252 befinden sich dabei in einander gegenüberliegenden Endbereichen der inneren und äußeren Lage 1524, 1525. In den ersten und zweiten Abschnitten 15241, 15251, 15242, 15252 sind jeweils Verbindungen ausgebildet, die weiter unten erläutert werden. Zwischen jedem ersten Abschnitt 15241, 15251 und zweiten Abschnitt 15242, 15252 befindet sich ein dritter Abschnitt 15243, 15253, in dem keine gesonderte Verbindung zwischen den Lagen oder zu dem Gassack ausgebildet ist.

Der erste Abschnitt 15241 der inneren Lage 1524 ist mittels einer ersten lösbaren Verbindung 170a an dem zweiten Gassack 140 befestigt, der zweite Abschnitt 15242 der inneren Lage 1524 mittels einer nicht lösbaren Verbindung 180. Die erste lösbare Verbindung 170a dient zudem der Befestigung des ersten Abschnitts 15251 der äußeren Lage 1525 an der inneren Lage 1524 und dem zweiten Gassack 140. Der zweite Abschnitt 15252 der äußeren Lage 1525 ist mittels einer zweiten lösbaren Verbindung 170b am zweiten Abschnitt 15242 der inneren Lage 1524 und dem zweiten Gassack 140 befestigt. Alternativ kann die zweite lösbare Verbindung 170b den zweiten Abschnitt 15252 der äußeren Lage 1525 lediglich am zweiten Abschnitt 15242 der inneren Lage 1524 befestigen, so dass der zweite Abschnitt 15242 der inneren Lage 1524 nicht über die zweite lösbare Verbindung 170b an dem zweiten Gassack 140 befestigt ist.

Auf der dem zweiten Gassack 140 abgewandten Seite der äußeren Lage 1525 ist (beispielsweise zwischen der ersten lösbaren Verbindung 170a und der zweiten lösbaren Verbindung 170b) ein Kontaktelement (beispielsweise in Form eines Flauschelements einer Klettverbindung) ausgebildet, um eine mechanische Verbindung (in Form einer Klettverbindung) mit dem Kontaktelement des ersten Verbindungselements 151 auszubilden. Das Flauschelement des zweiten Verbindungselements 152 und das Klettelement des ersten Verbindungselements 151 können auch vertauscht sein.

Die lösbaren Verbindungen 170a, 170b des ersten und zweiten Verbindungselements 151, 152 unterscheiden sich in ihrer Widerstandsfähigkeit gegenüber einer von außen einwirkenden Kraft. Insbesondere ist der zum Lösen der ersten lösbaren Verbindungen 170a erforderliche Krafteintrag geringer als der zum Lösen der zweiten lösbaren Verbindungen 170b erforderliche Krafteintrag. Die beiden ersten lösbaren Verbindungen 170a sind in Bezug auf ihre Widerstandsfähigkeit vergleichbar. Ebenso sind die zweiten lösbaren Verbindungen vergleichbar widerstandsfähig. So sind die ersten lösbaren Verbindungen 170a dergestalt, dass der Krafteintrag, der auftritt, wenn die Hülle des ersten und des zweiten Gassacks 120, 140 während des Aufblasvorgangs gestrafft wird oder wenn der erste Gassack 120 und der zweite Gassack 140 im aufgeblasenen Zustand voneinander abprallen, ausreicht, um die ersten lösbaren Verbindungen 170a zu lösen. Demgegenüber lösen sich die zweiten lösbaren Verbindungen 170b erst, wenn der zu schützende Fahrzeuginsasse auf die Gassackanordnung 100 aufprallt und dabei eine Kraft auf den ersten und den zweiten Gassack 120, 140 ausübt. Die ersten lösbaren Verbindungen 170a sind zwischen den zweiten lösbaren Verbindungen 170b einerseits und dem sich auf dem Fahrzeugsitz S befindlichen Fahrzeuginsassen P andererseits angeordnet, wenn die Gassackanordnung 100 bestimmungsgemäß zum Schutz des Fahrzeuginsassen P an einer Fahrzeugstruktur S angeordnet ist. In Fahrtrichtung F betrachtet befinden sich die zweiten lösbaren Verbindungen 170b zwischen den ersten lösbaren Verbindungen 170a und den nicht lösbaren Verbindungen 180. Aufgrund der relativen Anordnung der lösbaren Verbindungen 170a, 170b und der oben beschriebenen Bemessung der Krafteinträge, die zum Lösen der lösbaren Verbindungen 170a, 170b erforderlich sind, lösen sich zunächst die ersten lösbaren Verbindungen 170a und zeitlich verzögert die zweiten lösbaren Verbindungen 170b. Sowohl die erste als auch die zweite lösbare Verbindung 170a, 170b kann als Reißnaht, Heftnaht, Klettverbindung oder als magnetische Verbindung ausgebildet sein.

In Figur 9 sind die sich entfaltenden Gassäcke 120, 140 noch so weit voneinander beabstandet, dass die Verbindungselemente 151, 152 keine Verbindung miteinander ausbilden können. Im weiteren Verlauf des Entfaltungsprozesses der Gassäcke 120, 140 (Figur 10) nähern sich die Vorderabschnitte 121, 141 der Gassäcke 120, 140 einander an, wobei das erste Verbindungselement 151 und das zweite Verbindungselement 152 mittels der Kontaktelemente (zumindest abschnittsweise) eine mechanische Verbindung miteinander ausbilden und woraufhin sich die ersten lösbaren Verbindungen 170a lösen. Die äußeren Lagen 1515, 1525 der Verbindungselemente 151, 152 werden so frei beweglich gegenüber dem ersten bzw. zweiten Gassack 120, 140, so dass sich die Fläche, in der die Kontaktelemente einander kontaktieren und die mechanische Verbindung zwischen dem ersten Verbindungselement 151 und dem zweiten Verbindungselement 152 ausbilden, vergrößern kann. Im weiteren Verlauf (Figur 11) wird der Kopf des Insassen P in Folge des Aufpralls in Fahrtrichtung F beschleunigt (verlagert), wodurch der erste und der zweite Gassack 120, 140 auseinandergedrängt werden und die zweiten lösbaren Verbindungen 170b aufbrechen. Die Bewegungsfreiheit der äußeren Lagen 1515, 1525 gegenüber den inneren Lagen 1514, 1524 steigt, und die Verbindungselemente 151, 152 können sich (durch fortschreitende Beschleunigung des Kopfs des Insassen P in Fahrtrichtung F) in ihrer gesamten Länge entfalten (Figur 12). Das erste Verbindungselement 151 und das zweite Verbindungselement 152 bilden im (über die Kontaktelemente) miteinander verbundenen Zustand eine sich zwischen den nicht lösbaren Verbindungen 180 und quer zur Fahrtrichtung F erstreckende Lage zur Zurückhaltung des Kopfes des Fahrzeuginsassen P. Der erste Gassack 120 und der zweite Gassack 140 sind dabei voneinander beabstandet.

## Patentansprüche

1. Gassackanordnung (100) für ein Fahrzeuginsassen-Rückhaltesystem, mit
- mindestens einem ersten und mindestens einem zweiten zum Schutz eines Fahrzeuginsassen (P) aufblasbaren Gassack (120, 140), wobei der mindestens eine erste und mindestens eine zweite Gassack (120, 140) jeweils an einer Fahrzeugstruktur (S) anzuordnen ist, und
- einem Verbindungssystem (150), das zur Ausbildung einer mechanischen Verbindung zwischen dem mindestens einen ersten Gassack (120) und dem mindestens einen zweiten Gassack (140) vorgesehen ist, wobei das Verbindungssystem (150) ein erstes Verbindungselement (151) aufweist, das an dem mindestens einen ersten Gassack (120) befestigt ist, und ein zweites Verbindungselement (152), das an dem mindestens einen zweiten Gassack (140) befestigt ist, wobei das erste und das zweite Verbindungselement (151, 152) zur Ausbildung der mechanischen Verbindung zwischen dem mindestens einen ersten Gassack (120) und dem mindestens einen zweiten Gassack (140) zusammenwirken, wobei die mechanische Verbindung zwischen dem mindestens einen ersten Gassack (120) und dem mindestens einen zweiten Gassack (140) während oder am Ende des Aufblasvorgangs der Gassäcke (120, 140) ausgebildet wird, indem sich der mindestens eine erste Gassack (120) und der mindestens eine zweite Gassack (140) einander annähern oder kontaktieren,
**dadurch gekennzeichnet,**
**dass** das erste Verbindungselement (151) einen ersten Abschnitt (1511, 15151) aufweist, der über eine lösbare Verbindung (170, 170a) an dem mindestens einen ersten Gassack (120) direkt oder indirekt befestigt ist, und einen zweiten Abschnitt (1512, 15152, 15142), der sich außerhalb des ersten Abschnitts (1511, 15151) befindet und über eine nicht lösbare Verbindung (180, 180b) an dem mindestens einen ersten Gassack (120) befestigt ist, wobei die lösbare Verbindung (170, 170a) erst nach zumindest teilweiser Ausbildung der mechanischen Verbindung zwischen dem mindestens einen ersten Gassack (120) und dem mindestens einen zweiten Gassack (140) lösbar ist.

2. Gassackanordnung (100) nach Anspruch 1, **dadurch gekennzeichnet, dass** sich durch das Lösen der lösbaren Verbindung (170, 170a) die Form oder Ausrichtung des ersten Verbindungselements (151) ändert.

3. Gassackanordnung (100) nach Anspruch 1 oder 2, **dadurch gekennzeichnet, dass** die lösbare Verbindung (170, 170a) als Reißnaht, Heftnaht, Klettverbindung oder als magnetische Verbindung ausgebildet ist.

4. Gassackanordnung (100) nach einem der vorherigen Ansprüche, **dadurch gekennzeichnet, dass** sich die lösbare Verbindung (170) dadurch löst, dass
- der zu schützende Fahrzeuginsasse (P) auf die Gassackanordnung (100) durch Aufprall eine Kraft ausübt,
- der mindestens eine erste Gassack (120) und der mindestens eine zweite Gassack (140) im aufgeblasenen Zustand voneinander abprallen, oder
- die Hülle des mindestens einen ersten Gassacks (120) während des Aufblasvorgangs gestrafft wird,
und insbesondere dass sich die nicht lösbare Verbindung (180, 180b) nicht dadurch löst, dass
- der zu schützende Fahrzeuginsasse (P) auf die Gassackanordnung (100) durch Aufprall eine Kraft ausübt,
- der mindestens eine erste Gassack (120) und der mindestens eine zweite Gassack (140) im aufgeblasenen Zustand voneinander abprallen, oder
- die Hülle des mindestens einen ersten Gassacks (120) während des Aufblasvorgangs gestrafft wird.

5. Gassackanordnung (100) nach einem der vorherigen Ansprüche, **dadurch gekennzeichnet, dass** die lösbare Verbindung (170, 170a) in einem ersten Endbereich des ersten Verbindungselements (151) ausgebildet ist und insbesondere dass zumindest in einem zweiten Endbereich des ersten Verbindungselements (151), der dem ersten Endbereich gegenüberliegt, die nicht lösbare Verbindung (180, 180b) ausgebildet ist.

6. Gassackanordnung (100) nach einem der vorherigen Ansprüche, **dadurch gekennzeichnet, dass** das erste Verbindungselement (151) zumindest abschnittsweise mehrlagig, bevorzugt doppellagig, ausgebildet ist, wobei eine innere Lage (1514) des ersten Verbindungselements (151) an dem mindestens einen ersten Gassack (120) befestigt ist und wobei eine äußere Lage (1515) des ersten Verbindungselements (151) mittels der lösbaren Verbindung (170) an der inneren Lage (1514) befestigt ist.

7. Gassackanordnung (100) nach Anspruch 6, **dadurch gekennzeichnet, dass** die äußere Lage (1515) und die innere Lage (1514) einstückig ausgebildet und durch Umschlagen unter Ausbildung einer Falte gebildet sind, oder dass die äußere Lage (1515) mittels der nicht lösbaren Verbindung (180b) an der inneren Lage (1514) befestigt ist.

8. Gassackanordnung (100) nach Anspruch 6 oder 7, **dadurch gekennzeichnet, dass** die innere Lage (1514) des ersten Verbindungselements (151) nur mittels einer oder mehrerer nicht lösbarer Verbindung(en) an dem mindestens einen ersten Gassack (120) befestigt ist.

9. Gassackanordnung (100) nach einem der Ansprüche 1 bis 5, **dadurch gekennzeichnet, dass** das erste Verbindungselement (151) und das zweite Verbindungselement (152) jeweils zumindest abschnittsweise mehrlagig ausgebildet ist und mindestens eine innere Lage (1514, 1524) und eine äußere Lage (1515, 1525) umfasst, wobei die mindestens eine innere Lage (1514, 1524) über die nicht lösbare Verbindung (180) an dem mindestens einen ersten bzw. zweiten Gassack (120, 140) befestigt ist und wobei die äußere Lage (1515, 1525) mittels der lösbaren Verbindung (170a) an dem mindestens einen ersten bzw. zweiten Gassack (120, 140) befestigt ist.

10. Gassackanordnung (100) nach einem der vorherigen Ansprüche, **dadurch gekennzeichnet, dass** die lösbare Verbindung und die nicht lösbare Verbindung derart zueinander angeordnet sind, dass sich die lösbare Verbindung zwischen dem zu schützenden Fahrzeuginsassen und der nicht lösbaren Verbindung befindet.

11. Gassackanordnung (100) nach einem der vorherigen Ansprüche, **dadurch gekennzeichnet, dass** das Verbindungssystem (150) als Klettverbindung ausgebildet ist.

12. Gassackanordnung (100) nach einem der vorherigen Ansprüche, **dadurch gekennzeichnet, dass** das zweite Verbindungselement (152) einen ersten Abschnitt aufweist, der über eine lösbare Verbindung (170) an dem mindestens einen zweiten Gassack (140) direkt oder indirekt befestigt ist, und einen zweiten Abschnitt, der sich außerhalb des ersten Abschnitts befindet und über eine nicht lösbare Verbindung (180) an dem mindestens einen zweiten Gassack (140) befestigt ist.

13. Gassackanordnung (100) nach einem der vorherigen Ansprüche, **dadurch gekennzeichnet, dass** der mindestens eine erste und der mindestens eine zweite Gassack (120, 140) zueinander und das erste und zweite Verbindungselement (151, 152) an dem mindestens einen ersten beziehungsweise mindestens einen zweiten Gassack (120, 140) derart angeordnet sind, dass sich das erste und zweite Verbindungselement (151, 152) während des Aufblasvorgangs des mindestens einen ersten und mindestens einen zweiten Gassacks (120, 140) aufeinander zu bewegen.

14. Gassackanordnung (100) nach einem der vorherigen Ansprüche, **dadurch gekennzeichnet, dass** die Gassackanordnung (100) für ein sitzbasiertes Fahrzeuginsassen-Rückhaltesystem vorgesehen ist, wobei der mindestens eine erste und mindestens eine zweite Gassack (120, 140) jeweils an einem Fahrzeugsitz (S) anzuordnen ist, insbesondere wobei im bestimmungsgemäß an einem Fahrzeugsitz (S) angeordneten Zustand der Gassackanordnung (100) und im aufgeblasenen Zustand des mindestens einen ersten und zweiten Gassacks (120, 140) sich der mindestens eine erste Gassack (120) und der mindestens eine zweite Gassack (140) auf gegenüberliegenden Seiten des Kopfbereichs und jeweils vor dem Brustbereich des auf dem Fahrzeugsitz (S) sitzenden Insassen (P) erstrecken, wobei das Verbindungssystem (150) vor dem Brustbereich ausgebildet ist.

15. Fahrzeugsitz (S) mit einer Gassackanordnung (100) nach Anspruch 14, **dadurch gekennzeichnet, dass** sich der mindestens eine erste Gassack (120) und der mindestens eine zweite Gassack (140) im gefalteten Zustand zumindest teilweise in Sitzbreitenrichtung gegenüberliegen, wobei der mindestens eine erste Gassack (120) und der mindestens eine zweite Gassack (140) im gefalteten Zustand beispielsweise in einander gegenüberliegenden seitlichen beziehungsweise oberen Abschnitten einer Rückenlehne (R), einer Sitzfläche (F) oder einer Kopfstütze (K) des Fahrzeugsitzes (S) oder in einander gegenüberliegenden Armlehnen des Fahrzeugsitzes (S) angeordnet sind.

## Claims

1. Gas bag arrangement (100) for a vehicle occupant restraint system, comprising
- at least one first and at least one second gas bag (120, 140) which can be inflated in order to protect a vehicle occupant (P), wherein the at least one first and at least one second gas bag (120, 140) is to be arranged in each case on a vehicle structure (S), and
- a connection system (150) which is provided for forming a mechanical connection between the at least one first gas bag (120) and the at least one second gas bag (140), wherein the connection system (150) comprises a first connecting element (151) which is fastened on the at least one first gas bag (120), and a second connecting element (152) which is fastened on the at least one second gas bag (140), wherein the first and the second connecting element (151, 152) interact in order to form the mechanical connection between the at least one first gas bag (120) and the at least one second gas bag (140), wherein the mechanical connection between the at least one first gas bag (120) and the at least one second gas bag (140) is formed during or at the end of the inflation process of the gas bags (120, 140), in that the at least one first gas bag (120) and the at least one second gas bag (140) approach or contact one another,
**characterised in that**
the first connecting element (151) comprises a first portion (1511, 15151) which is directly or indirectly fastened to the at least one first gas bag (120) via a releasable connection (170, 170a), and a second portion (1512, 15152, 15142) which is located outside of the first portion (1511, 15151) and is fastened to the at least one first gas bag (120) via a non-releasable connection (180, 180a), wherein the releasable connection (170, 170a) can be released only after the mechanical connection between the at least one first gas bag (120) and the at least one second gas bag (140) has been formed at least in part.

2. Gas bag arrangement (100) according to claim 1, **characterised in that** the shape or orientation of the first connecting element (151) changes by releasing of the releasable connection (170, 170a).

3. Gas bag arrangement (100) according to either claim 1 or claim 2, **characterised in that** the releasable connection (170, 170a) is designed as a tear seam, basted seam, hook and loop connection, or as a magnetic connection.

4. Gas bag arrangement (100) according to any of the preceding claims, **characterised in that** the releasable connection (170) is released **in that**
- the vehicle occupant (P) to be protected exerts a force on the gas bag arrangement (100) by the impact,
- the at least one first gas bag (120) and the at least one second gas bag (140) bounce off one another in the inflated state, or
- the covering of the at least one first gas bag (120) is tightened during the inflation process,
and in particular that the non-releasable connection (180, 180a) does not release **in that**
- the vehicle occupant (P) to be protected exerts a force on the gas bag arrangement (100) by the impact,
- the at least one first gas bag (120) and the at least one second gas bag (140) bounce off one another in the inflated state, or
- the covering of the at least one first gas bag (120) is tightened during the inflation process.

5. Gas bag arrangement (100) according to any of the preceding claims, **characterised in that** the releasable connection (170, 170a) is formed in a first end region of the first connecting element (151) and in particular that the non-releasable connection (180, 180a) is formed at least in a second end region of the first connecting element (151) which is opposite the first end region.

6. Gas bag arrangement (100) according to any of the preceding claims, **characterised in that** the first connecting element (151) is formed having multiple layers, preferably two layers, at least in portions, wherein an inner layer (1514) of the first connecting element (151) is fastened to the at least one first gas bag (120), and wherein an outer layer (1515) of the first connecting element (151) is fastened to the inner layer (1514) by means of the releasable connection (170).

7. Gas bag arrangement (100) according to claim 6, **characterised in that** the outer layer (1515) and the inner layer (1514) are formed in one piece and are formed by turning down, forming a fold, or **in that** the outer layer (1515) is fastened to the inner layer (1514) by means of the non-releasable connection (180b).

8. Gas bag arrangement (100) according to either claim 6 or claim 7, **characterised in that** the inner layer (1514) of the first connecting element (151) can be fastened to the at least one first gas bag (120) only by means of one or more non-releasable connection(s).

9. Gas bag arrangement (100) according to any of claims 1 to 5, **characterised in that** the first connecting element (151) and the second connecting element (152) is in each case formed having multiple layers, at least in portions, and comprises at least one inner layer (1514, 1524) and one outer layer (1515, 1525), wherein the at least one inner layer (1514, 1524) is fastened to the at least one first or second gas bag (120, 140) via the non-releasable connection (180), and wherein the outer layer (1515, 1525) is fastened to the at least one first or second gas bag (120, 140) by means of the releasable connection (170a).

10. Gas bag arrangement (100) according to any of the preceding claims, **characterised in that** the releasable connection and the non-releasable connection are arranged relative to one another in such a way that the releasable connection is located between the vehicle occupant to be protected and the non-releasable connection.

11. Gas bag arrangement (100) according to any of the preceding claims, **characterised in that** the connection system (150) is designed as a hook and loop connection.

12. Gas bag arrangement (100) according to any of the preceding claims, **characterised in that** the second connecting element (152) comprises a first portion which is directly or indirectly fastened to the at least one second gas bag (140) via a releasable connection (170), and a second portion which is located outside of the first portion and is fastened to the at least one second gas bag (140) via a non-releasable connection (180).

13. Gas bag arrangement (100) according to any of the preceding claims, **characterised in that** the at least one first and the at least one second gas bag (120, 140) are arranged relative to one another and the first and second connecting element (151, 152) are arranged on the at least one first or at least one second gas bag (120, 140), in such a way that the first and second connecting element (151, 152) move towards one another during the inflation process of the at least one first and at least one second gas bag (120, 140).

14. Gas bag arrangement (100) according to any of the preceding claims, **characterised in that** the gas bag arrangement (100) is provided for a seat-based vehicle occupant restraint system, wherein the at least one first and at least one second gas bag (120, 140) is in each case to be arranged on a vehicle seat (S), in particular wherein, in the case of a state of the gas bag arrangement (100) arranged as intended on a vehicle seat (S) and in the inflated state of the at least one first and second gas bag (120, 140), the at least one first gas bag (120) and the at least one second gas bag (140) extend on opposite sides of the head region and in each case in front of the chest region of the occupant (P) sitting on the vehicle seat (S), wherein the connection system (150) is formed in front of the chest region.

15. Vehicle seat (S) comprising an gas bag arrangement (100) according to claim 14, **characterised in that** the at least one first gas bag (120) and the at least one second gas bag (140) are opposite one another at least in part in the seat width direction, in the folded state, wherein the at least one first gas bag (120) and the at least one second gas bag (140) are arranged, in the folded state, for example in mutually opposing side or upper portions of a backrest (R), a seat surface (F), or a headrest (K) of the vehicle seat (S), or in mutually opposing armrests of the vehicle seat (S).

## Revendications

1. Ensemble de coussins à gaz (100) pour un système de retenue d'occupants de véhicule, avec
- au moins un premier et au moins un deuxième coussin à gaz gonflable (120, 140) pour protéger un occupant de véhicule (P), dans lequel l'au moins un premier et au moins un deuxième coussin à gaz (120, 140) sont à disposer respectivement sur une structure de véhicule (S), et
- un système de liaison (150), qui est prévu pour réaliser une liaison mécanique entre l'au moins un premier coussin à gaz (120) et l'au moins un deuxième coussin à gaz (140), dans lequel le système de liaison (150) présente un premier élément de liaison (151), qui est fixé sur l'au moins un premier coussin à gaz (120), et un deuxième élément de liaison (152), qui est fixé sur l'au moins un deuxième coussin à gaz (140), dans lequel le premier et le deuxième élément de liaison (151, 152) coopèrent pour réaliser la liaison mécanique entre l'au moins un premier coussin à gaz (120) et l'au moins un deuxième coussin à gaz (140), dans lequel la liaison mécanique entre l'au moins un premier coussin à gaz (120) et l'au moins un deuxième coussin à gaz (140) est réalisée pendant ou à la fin du processus de gonflage des coussins à gaz (120, 140) en ce que l'au moins un premier coussin à gaz (120) et l'au moins un deuxième coussin à gaz (140) se rapprochent ou entrent en contact mutuellement,
**caractérisé en ce que**
le premier élément de liaison (151) présente une première section (1511, 15151), qui est fixée directement ou indirectement sur l'au moins un premier coussin à gaz (120) par l'intermédiaire d'une liaison détachable (170, 170a), et une deuxième section (1512, 15152, 15142), qui se trouve à l'extérieur de la première section (1511, 15151) et est fixée sur l'au moins un premier coussin à gaz (120) par l'intermédiaire d'une liaison non détachable (180, 180b), dans lequel la liaison détachable (170, 170a) peut être détachée seulement après la réalisation au moins en partie de la liaison mécanique entre l'au moins un premier coussin à gaz (120) et l'au moins un deuxième à gaz (140).

2. Ensemble de coussins à gaz (100) selon la revendication 1, **caractérisé en ce que** la forme ou l'orientation du premier élément de liaison (151) varient en détachant la liaison détachable (170, 170a).

3. Ensemble de coussins à gaz (100) selon la revendication 1 ou 2, **caractérisé en ce que** la liaison détachable (170, 170a) est réalisée en tant que couture déchirable, couture de faufilage, liaison auto-agrippante ou en tant que liaison magnétique.

4. Ensemble de coussins à gaz (100) selon l'une quelconque des revendications précédentes, **caractérisé en ce que** la liaison détachable (170) se détache **en ce que**
- l'occupant de véhicule (P) à protéger exerce une force par impact sur l'ensemble de coussins à gaz (100),
- l'au moins un premier coussin à gaz (120) et l'au moins un deuxième à gaz (140) s'écartent l'un de l'autre par un impact dans l'état gonflé, ou
- l'enveloppe de l'au moins un premier coussin à gaz (120) est tendue pendant le processus de gonflage,
et en particulier la liaison non détachable (180, 180b) ne se détache pas du fait que :
- l'occupant de véhicule (P) à protéger exerce une force par impact sur l'ensemble de coussins à gaz (100),
- l'au moins un premier coussin à gaz (120) et l'au moins un deuxième coussin à gaz (140) s'écartent l'un de l'autre par impact dans l'état gonflé, ou
- l'enveloppe de l'au moins un premier coussin à gaz (120) est tendue pendant le processus de gonflable.

5. Ensemble de coussins à gaz (100) selon l'une quelconque des revendications précédentes, **caractérisé en ce que** la liaison détachable (170, 170a) est réalisée dans une première zone d'extrémité du premier élément de liaison (151), et en particulier que la liaison non détachable (180, 180b) est réalisée au moins dans une deuxième zone d'extrémité du premier élément de liaison (151) qui fait face à la première zone d'extrémité.

6. Ensemble de coussins à gaz (100) selon l'une quelconque des revendications précédentes, **caractérisé en ce que** le premier élément de liaison (151) est réalisé au moins par endroits en couches multiples, de manière préférée en double couche, dans lequel une couche intérieure (1514) du premier élément de liaison (151) est fixée sur l'au moins un premier coussin à gaz (120) et dans lequel une couche extérieure (1515) du premier élément de liaison (151) est fixée sur la couche intérieure (1514) au moyen de la liaison détachable (170).

7. Ensemble de coussins à gaz (100) selon la revendication 6, **caractérisé en ce que** la couche extérieure (1515) et la couche intérieure (1514) sont réalisées d'un seul tenant et sont formées en réalisant un pli par repliage, ou que la couche extérieure (1515) est fixée sur la couche intérieure (1514) au moyen de la liaison non détachable (180b).

8. Ensemble de coussins à gaz (100) selon la revendication 6 ou 7, **caractérisé en ce que** la couche intérieure (1514) du premier élément de liaison (151) est fixée sur l'au moins un premier coussin à gaz (120) seulement au moyen d'une ou de plusieurs liaison(s) non détachable(s).

9. Ensemble de coussins à gaz (100) selon l'une quelconque des revendications 1 à 5, **caractérisé en ce que** le premier élément de liaison (151) et le deuxième élément de liaison (152) sont réalisés respectivement au moins par endroits en couches multiples et comprennent au moins une couche intérieure (1514, 1524) et une couche extérieure (1515, 1525), dans lequel l'au moins une couche intérieure (1514, 1524) est fixée sur l'au moins un premier ou deuxième coussin à gaz (120, 140) par l'intermédiaire de la liaison non détachable (180), et dans lequel la couche extérieure (1515, 1525) est fixée sur l'au moins un premier ou deuxième coussin à gaz (120, 140) au moyen de la liaison détachable (170a).

10. Ensemble de coussins à gaz (100) selon l'une quelconque des revendications précédentes, **caractérisé en ce que** la liaison détachable et la liaison non détachable sont disposées l'une par rapport à l'autre de telle manière que la liaison détachable se trouve entre l'occupant de véhicule à protéger et la liaison non détachable.

11. Ensemble de coussins à gaz (100) selon l'une quelconque des revendications précédentes, **caractérisé en ce que** le système de liaison (150) est réalisé en tant que liaison auto-agrippante.

12. Ensemble de coussins à gaz (100) selon l'une quelconque des revendications précédentes, **caractérisé en ce que** le deuxième élément de liaison (152) présente une première section, qui est fixée directement ou indirectement sur l'au moins un deuxième coussin à gaz (140) par l'intermédiaire d'une liaison détachable (170), et une deuxième section, qui se trouve à l'extérieur de la première section et est fixée sur l'au moins un deuxième coussin à gaz (140) par l'intermédiaire d'une liaison non détachable (180).

13. Ensemble de coussins à gaz (100) selon l'une quelconque des revendications précédentes, **caractérisé en ce que** l'au moins un premier et l'au moins un deuxième coussin à gaz (120, 140) sont disposés l'un par rapport à l'autre et le premier et le deuxième élément de liaison (151, 152) sont disposés sur l'au moins un premier ou l'au moins un deuxième coussin à gaz (120, 140) de telle manière que le premier et le deuxième élément de liaison (151, 152) se déplacent l'un vers l'autre pendant le processus de gonflage de l'au moins un premier et de l'au moins un deuxième coussin à gaz (120, 140).

14. Ensemble de coussins à gaz (100) selon l'une quelconque des revendications précédentes, **caractérisé en ce que** l'ensemble de coussins à gaz (100) est prévu pour un système de retenue d'occupants de véhicule basé sur un siège, dans lequel l'au moins un premier et au moins un deuxième coussin à gaz (120, 140) sont à disposer respectivement sur un siège de véhicule (S), en particulier dans lequel l'au moins un premier coussin à gaz (120) et l'au moins un deuxième coussin à gaz (140) s'étendent sur des côtés opposés de la zone de tête et respectivement devant la zone de poitrine de l'occupant (P) assis sur le siège de véhicule (S) dans l'état de l'ensemble de coussins à gaz (100) disposé selon l'utilisation prévue sur un siège de véhicule (S) et dans l'état gonflé de l'au moins un premier et deuxième coussin à gaz (120, 140), dans lequel le système de liaison (150) est réalisé avant la zone de poitrine.

15. Siège de véhicule (S) avec un ensemble de coussins à gaz (100) selon la revendication 14, **caractérisé en ce que** l'au moins un premier coussin à gaz (120) et l'au moins un deuxième coussin à gaz (140) se font face au moins en partie dans le sens de largeur de siège dans l'état plié, dans lequel l'au moins un premier coussin à gaz (120) et l'au moins un deuxième coussin à gaz (140) sont disposés dans l'état plié par exemple dans des sections latérales ou supérieures se faisant face les unes les autres d'un dossier (R), d'une surface de siège (F) ou d'un appui-tête (K) du siège de véhicule (S) ou dans des accoudoirs se faisant face les uns les autres du siège de véhicule (S).
